# FASCICULE DE BREVET EUROPEEN

(11) **EP 2 610 320 B1**
(45) Date de publication et mention de la délivrance du brevet: **29.10.2014**
(21) Numéro de dépôt: 12198858.8
(22) Date de dépôt: 21.12.2012
(51) Int. Cl.: C09J 153/02, C09J 125/02, C09J 7/00, B65B 63/08, B65D 65/46, C08J 5/18, C09J 125/16, C08L 91/06

(54) **Composition adhésive thermofusible destinée à former un film apte à envelopper un produit adhésif thermofusible, et son utilisation**
Heißschmelzklebezusammensetzung, die zur Bildung einer Folie zum Einwickeln eines Heißschmelzklebe-Produkts dient, und ihre Anwendung
Hot-melt adhesive composition for forming a film capable of enclosing a hot-melt adhesive, and use thereof

(30) Priorité: 26.12.2011 FR 1162452
(43) Date de publication de la demande: 03.07.2013
(73) Titulaire: BOSTIK SA, 93210 La Plaine Saint Denis (FR)
(72) Inventeur: Goubard, David, 60200 COMPIEGNE (FR)
(74) Mandataire: Santarelli

(56) Documents cités:
- WO-A1-2006/040194
- WO-A1-2006/050108
- US-A1- 2006 199 897

## Description

L'invention concerne une composition adhésive destinée à former un film apte à envelopper un produit adhésif thermofusible. En particulier, la présente invention concerne une composition adhésive destinée à former un film pour envelopper un produit adhésif thermofusible prêt à l'emploi, plus particulièrement dans le cas où les produits ainsi enveloppés sont fabriqués par un procédé de co-extrusion.

Les produits adhésifs thermofusibles sont généralement solides à température ambiante, mais sont appliqués dans un état fondu ou tout au moins semi-rigide. Ces produits adhésifs thermofusibles sont généralement fournis sous forme de blocs solides ou de pastilles, généralement en fûts ou en berlingots le plus souvent de forme sensiblement cylindrique. Ces berlingots, typiquement d'un poids compris dans une fourchette d'environ 35 g à environ 2 kg, sont difficiles à manipuler et à stocker car les produits adhésifs thermofusibles, et plus particulièrement les produits adhésifs thermofusibles sensibles à la pression (« *hot melt pressure sensitive adhesives* » ou HMPSA en anglais), sont très collants et/ou mous à température ambiante.

C'est ainsi qu'ont été développées des compositions adhésives aptes à former des films qui enveloppent ces berlingots, non seulement pour faciliter leur manipulation et leur stockage, mais aussi pour les protéger de leur environnement. Ces films, qui forment une sorte de "peau" autour du berlingot, sont généralement formés par co-extrusion au moment de la formation du berlingot, autour du berlingot. Lors de l'utilisation du berlingot, le film qui l'enveloppe est fondu en même temps que le produit adhésif thermofusible. En effet, la présence de la composition de film en faible pourcentage de poids dans le berlingot enveloppé permet théoriquement d'obtenir, lors de la fusion, un matériau sensiblement homogène et apte à son utilisation.

Malheureusement, à l'heure actuelle, les compositions adhésives thermofusibles développées pour former des films autour de ces berlingots, posent des problèmes de compatibilité avec les bases chimiques du matériau du berlingot et/ou de tenue au cours du temps. Ainsi, au cours du stockage, les composants mobiles de bas poids moléculaire présents dans le matériau du berlingot ont tendance à migrer à travers la peau pour générer du mottage, ou bien la peau devient tellement dure qu'elle craquelle, se fissure et n'assure plus sa fonction de barrière.

En outre, ces compositions adhésives posent aussi des problèmes de chute des performances applicatives estimée à hauteur de 10 à 30%, car la fusion du berlingot conduit à un matériau sensiblement hétérogène.

La demande de brevet WO 2006/050108 décrit un procédé pour envelopper un matériau plastique, tel qu'un produit adhésif thermofusible constitué d'un matériau adhésif thermofusible, ledit procédé comprenant la réalisation d'un film enveloppant ce matériau, ledit film étant co-extrudé autour du matériau lors de sa formation. Un tel film polymère comporte au moins 25% en poids en cire, présente une enthalpie de fusion d'au moins 100 J/g, ainsi qu'une valeur d'élongation à la rupture d'au moins 100%. Un tel film est réalisé en mélangeant une quantité appropriée de polymère à base d'éthylène partiellement cristallin avec un copolymère bloc élastomère thermoplastique et/ou un élastomère à base de propylène ou à base d'éthylène.

Malheureusement, la composition adhésive apte à former un film décrite dans ce document, bien qu'elle ait en général une bonne tenue thermomécanique (durant le procédé de fabrication et lors du stockage), peut craqueler dans certaines conditions de stockage et de transport.

Par « *enveloppant* » ou « *enrobant* », on entend généralement recouvrant totalement les surfaces extérieures. Par *« thermofusible* », on entend généralement apte à être fondu à température le plus souvent d'au moins 50°C.

Ainsi, à ce jour, il n'existe pas de composition adhésive permettant d'enrober un matériau adhésif thermofusible et répondant à l'ensemble des exigences de l'industrie telles qu'exposées ci-dessus.

La présente invention a pour objet de proposer une nouvelle composition adhésive résolvant les problèmes de l'art antérieur.

La composition adhésive selon l'invention est une composition adhésive destinée à former un film, la composition comprenant, en poids par rapport au poids total de la composition :
a) de 20 à 60% d'au moins un copolymère bloc styrénique, généralement choisi dans le groupe formé par les copolymères triblocs de formule A-B-A dans laquelle A représente un bloc non élastomère styrénique (ou polystyrène) et B représente un bloc élastomère de polybutadiène hydrogéné totalement ou en partie, les copolymères diblocs de formule A-B dans laquelle A et B sont tels que définis précédemment, et leurs mélanges;
b) de 5 à 55% d'au moins une résine tackifiante de masse molaire en nombre comprise entre 200 Da et 10 kDa (déterminée par chromatographie par perméation de gel - GPC- avec étalonnage polystyrène), et choisie dans le groupe formé par les résines susceptibles d'être obtenues :
   i) par hydrogénation, polymérisation ou copolymérisation (avec ou sans hydrocarbure aromatique) de mélanges d'hydrocarbures aliphatiques insaturés ayant environ 5 ou 9 atomes de carbone, et issus de coupes pétrolières, et
   ii) par polymérisation d'hydrocarbures terpéniques en présence de catalyseurs de Friedel-Crafts, et
   iii) par polymérisation, suivie éventuellement d'hydrogénation au moins partielle, d'unités alpha méthylstyrène et éventuellement styrène;
c) de 10 à 40% d'au moins une cire de point de fusion de 75 à 125°C et de masse moléculaire moyenne en nombre de 500 à 1500 Da (déterminée par chromatographie par perméation de gel - GPC- avec étalonnage polystyrène) ; et
d) de 1 à 30% d'au moins un composant choisi parmi les cires de polyéthylène et les polyoléfines polymérisées par catalyse métallocène ; ladite composition présentant une viscosité (Brookfield) à 180°C comprise dans une fourchette de 3.000 à 70.000 mPa.s, un point de ramollissement compris dans une fourchette de 80 à 130°C, et un module élastique à 60°C, compris dans une fourchette de 2.10⁵ à 10⁸ Pa, tel que mesuré par test rhéologique de balayage en température de 150°C à 10°C à 10°C/min et à la fréquence d'oscillation constante de 10 rad/s.

La viscosité de la composition selon l'invention est, à 180°C, comprise dans une fourchette de 3000 à 70000 mPa.s, de préférence de 3500 à 40000. La viscosité est mesurée par viscosité Brookfield selon la méthode ASTM D 3236. Cette viscosité peut être mesurée en employant un appareil Thermosel Brookfield ou tout autre viscosimètre approprié, et en utilisant les techniques de test telles qu'elles sont décrites dans cette méthode ASTM.

Le point de ramollissement ou « *Ring and Ball softening point* » de la composition adhésive selon l'invention est compris dans une fourchette de 80 à 130°C, de préférence de 90 à 120°C. Ce point est déterminé selon la méthode ASTM E-28, le plus souvent en utilisant une unité Herzog automatique.

Le test rhéologique de balayage en température de 150 à 10°C à 10°C/min, et à la fréquence d'oscillation constante de 10 rad/s, permet de mesurer le module élastique G' à 60°C de la composition selon l'invention qui est généralement compris dans une fourchette de 2.10⁵ à 10⁸ Pa, de préférence de 2.10⁵ à 10⁷ Pa.

Le point de croisement des modules élastique G' et visqueux G " de la composition selon l'invention, par ce même test rhéologique de balayage en température de 150 à 10°C à 10°C/min et à la fréquence d'oscillation constante de 10 rad/s, est de préférence compris dans une fourchette de 70 à 100°C. Le point de croisement des modules élastique et visqueux est déterminé sur un rhéogramme donnant l'évolution du module élastique G' (en Pa) en fonction de la température, et l'évolution du module visqueux G" (en Pa) en fonction de la température, aux mêmes échelles : c'est le point de croisement de ces deux courbes. Par évolution, on entend ensemble de points de mesure, discontinus.

La composition adhésive selon l'invention présente en outre, de préférence, une enthalpie de fusion DSC comprise dans une fourchette de 40 à 100 J/g. Par DSC, on entend, ainsi qu'il est connu de l'homme du métier « *Differential Scanning Calorimetry ».* La méthode de test DSC est réalisée selon la norme ASTM D-3417, à des taux de balayage de 20°C/min sur un instrument type tel que l'appareil DSC instrument model 2010 de la société TA instruments. Trois rampes en température sont réalisés consécutivement sur un échantillon de 5 à 10 mg, sous atmosphère d'azote à température de-100°C jusqu'à 200°C, puis de 200°C jusqu'à -100°C, ensuite à nouveau de-100°C jusqu'à 200°C. Ce dernier balayage donne la mesure, reproductive, de l'enthalpie de fusion de la composition, exprimée en joules par gramme de matériau. L'enthalpie de fusion est aussi quelquefois appelée capacité de fusion ou capacité de chaleur spécifique par l'homme du métier.

Le copolymère bloc styrénique (composant a)) (ou SBC) utilisable dans la composition adhésive selon l'invention a généralement une masse molaire moyenne en poids M_{w} comprise entre 5 kDa et 500 kDa (déterminée par chromatographie par perméation de gel - GPC- avec étalonnage polystyrène).

Dans ce cas, la teneur en styrènes du copolymère bloc styrénique est généralement, et de préférence, comprise dans une fourchette de 10 à 50%, de préférence de 10 à 33%.

A-B-A représente un bloc copolymère de structure polystyrène-poly(éthylènebutylène)-polystyrène de dénomination SEBS.

Les copolymères triblocs compris dans la composition adhésive selon l'invention ont de préférence une structure linéaire.

On peut aussi utiliser un mélange de copolymères triblocs et de copolymères diblocs ayant le même bloc élastomère B, en raison notamment du fait que de tels mélanges sont disponibles commercialement.

Dans un tel cas, la teneur en copolymères diblocs dans le mélange de copolymères blocs styréniques est généralement comprise dans une fourchette de 0 à 80%, de préférence de 0 à 40% poids.

Le copolymère bloc styrénique préféré est le SEBS disponible auprès de la société Kraton Polymers (sous la marque Kraton G^{®}) ou auprès de la société Dynasol ou auprès de la société Enichem.

On peut citer comme exemples de produits commerciaux ayant une structure linéaire de SEBS :
- le Kraton^{®} G1726 (comportant 70% de copolymère dibloc et 30% d'unité styrène) ;
- le Kraton^{®} G1652 (comportant 0% de copolymère dibloc et 30% d'unité styrène); et
- le Kraton^{®} G1657 (comportant 30% de copolymère dibloc et 13% d'unité styrène).

Le copolymère bloc styrénique (composant a)) utilisable dans la composition adhésive selon l'invention est de préférence un copolymère de type SEBS, qui peut aussi comporter en outre de 0 à 15%, de préférence de 0 à 10%, d'au moins un copolymère SBC d'autre catégorie qu'un copolymère SEBS. Ainsi le composant a) peut comporter jusqu'à 10 à 15% d'au moins un copolymère choisi dans le groupe formé par les copolymères de type polystyrène-polyisoprène-polystyrène (SIS), les copolymères de type polystyrène-polyisoprène-polybutadiène-polystyrène (SIBS), les copolymères de type polystyrène-polybutadiène-polystyrène (SBS), et les copolymères de type polystyrène-poly(éthylène-propylène)-polystyrène (SEPS). Par exemple le composant a) peut comporter de 10 à 15 % de Vector^{®} 4411 (copolymère de type SIS comprenant 0% de dibloc et 44% de styrène).

La résine tackifiante (composant b)) utilisable dans la composition adhésive selon l'invention est le plus souvent disponible commercialement, et choisi parmi les résines tackifiantes non aromatiques et/ou les résines tackifiantes aromatiques, le plus souvent choisie dans le groupe formé par les résines tackifiantes appartenant à la catégorie i) ou ii) suivante et/ou dans le groupe des résines tackifiantes appartenant à la catégorie iii) suivante:
- Les résines i) : les résines hydrocarbonées à motifs C₅ telle que l'Escorez^{®} 1310 LC disponible auprès de la société Exxon Chemicals ; les résines hydrogénées DCPD (dicyclopentadiène) telle que l'Escorez^{®} 5400 disponible auprès de la société Exxon Chemicals ; les résines hydrogénées DCPD modifiées C₉ telle que l'Escorez^{®} 5600 disponible auprès de la société Exxon Chemicals; les résines hydrocarbonées à motif C₅ modifiées C₉ telles que la Wingtack^{®} ET et la Wingtack^{®} Extra disponibles auprès de la société Cray Valley ; les résines hydrogénées à motif C₅ telles que l'Eastotac^{®} H 100 W et la Regalite^{®} S1100 disponibles auprès de la société Eastman ;
- Les résines ii) : les résines terpèniques telle que la Sylvarès^{®} TR7115, disponible auprès de la société Arizona Chemicals;
- Les résines iii) : les résines aromatiques de type C9 au moins partiellement hydrogénées, telles que la Norsolene^{®} W80 disponible auprès de la société Cray Valley ; la Norsolene^{®} W85 disponible auprès de la société Cray Valley ; la Norsolene^{®} W100 disponible auprès de la société Cray Valley ; la Kristallex^{®} F80 disponible auprès de la société Eastman ; la Kristallex^{®} F100 disponible auprès de la société Eastman ; le Piccotex^{™} 120 disponible auprès de la société Eastman ; la Sylvares^{®} SA85 disponible auprès de la société Arizona Chemicals.

Par suite, la résine tackifiante (composant b)) utilisable dans la composition selon l'invention est une cire de type i) ou ii) et/ou une cire de type iii), c'est-à-dire soit une cire de type i) ou ii), soit une cire de type iii), soit une cire de type i) ou ii) et une cire de type iii).

La résine aromatique de type C9 est généralement obtenue par polymérisation d'alpha méthylstyrène, généralement sans action de phénols, ou par copolymérisation de styrène et d'alpha méthylstyrène. Elle peut être tout ou partiellement hydrogénée.

La cire (composant c)) utilisable dans la composition adhésive selon l'invention est typiquement et de préférence une cire Fisher-Tropsch (ou FT), c'est-à-dire une cire synthétique produite par procédé Fisher-Tropsch. Les hydrocarbures ainsi synthétisés sont généralement linéaires, et fractionnés en différents grades de cire FT avec des longueurs de chaîne comportant jusqu'à 100 atomes de carbone par molécule, leur classement étant fonction de leur chaine linéaire saturée. Ces hydrocarbures sont généralement libres d'aromatiques, de sulfure et d'azote.

Mais plus généralement, la cire qui peut être utilisée dans la composition adhésive selon l'invention est soit un résidu de produits secondaires de la polymérisation de l'éthylène ou du propène, soit spécifiquement synthétisée par polymérisation spécifique, par exemple Ziegler-Natta ou Fisher-Tropsch. Les grades Sasolwax^{®} ou Paraffint^{®} de la société Sasol, ainsi que les grades Polywax^{®} de la société Baker Petrolite sont particulièrement bien adaptés à l'invention.

Les cires commerciales utilisables sont les cires Polywax^{®} 500 et Sasolwax^{®} H1 de la société Baker Petrolite, ainsi que la cire Paraflint^{®} C80 de la société Sasol.

Le composant d) utilisable dans la composition selon l'invention est une cire de polyéthylène et/ou une polyoléfine polymérisée par catalyse métallocène, c'est-à-dire soit une cire de polyéthylène, soit une polyoléfine polymérisée par catalyse métallocène, soit une cire de polyéthylène et une polyoléfine polymérisée par catalyse métallocène.

La polyoléfine polymérisée par catalyse métallocène est par le plus souvent choisie parmi les produits commerciaux Affinity^{®} PL 1280, Affinity^{®} GA 1900, Affinity^{®} GA 1950, Infuse^{®} 9807 et Engage^{®} 8407/8400 disponibles auprès de la société Dow Chemical.

La cire de polyéthylène (ou homopolymère de polyéthylène) est par exemple telle qu'une cire de la gamme AC^{®} de la société Honeywell, et notamment une cire de grade AC^{®} 6 et/ou une cire de grade AC^{®} 8.

La composition selon l'invention peut en outre comprendre de 0 à 20% d'au moins une cire paraffinique, telle que par exemple une cire de paraffine de point de fusion compris dans une fourchette de 68-70°C, ou bien une cire de paraffine de point de fusion environ égal à 65°C, ou bien une cire de paraffine de point de fusion compris dans une fourchette de 58 à 60°C.

Plus généralement, une telle cire paraffinique a usuellement un point de fusion d'environ 50°C à environ 80°C, les points de fusion étant déterminés par méthode ASTM D 127-60.

La composition adhésive selon l'invention peut en outre comporter de 0 à 7% d'au moins une cire d'amide. Cette cire d'amide a généralement pour formule :

R-CO-NH-(CH₂)₂-NH-CO-R,

ou éthylène bis alkyl amide, où R est un alkyl comprenant de 10 à 20 atomes de carbone par molécule, de préférence de 16 à 18 atomes de carbone par molécule.

Parmi ces cires d'amide, on peut citer les stéramides de formule C₁₈H₃₇NO. Les produits commerciaux Crodamide^{®} telle que par exemple la Crodamide^{®} ER, la Crodamide^{®} EBS et la Crodamide^{®} EBO, sont des cires d'amide selon l'invention.

La composition selon l'invention peut en outre comprendre de 0 à 10% d'au moins une huile naphténique et/ou paraffinique telle que par exemple l'huile paraffinique Nyflex^{®} 222B disponible auprès de la société Nynas ou l'huile naphténique Primol^{®} 352 disponible auprès de la société Esso.

Dans un mode de réalisation préférée, la composition adhésive selon l'invention comprend en outre au moins un stabilisant et/ou au moins un antioxydant. Le stabilisant est utile dans la composition thermofusible selon l'invention et est généralement incorporé de façon à aider à protéger les polymères présents dans cette composition, et donc la composition adhésive elle-même, des effets de la dégradation thermique et oxydante qui peut se produire durant la fabrication et l'application de la composition en tant que film, ainsi que lors de son exposition usuelle à l'environnement ambiant. Une telle dégradation se manifeste généralement par une détérioration de l'apparence, des propriétés physiques et des caractéristiques de performance de la composition. Tout stabilisant et/ou tout antioxydant connu de l'homme du métier peut être incorporé dans la composition adhésive selon l'invention. Parmi les stabilisants préférés, un stabilisant particulièrement préféré est l'Irganox^{®} 1010, ou pentaérythritol tetrakis ((3,5-di-tert-butyl-4-hydroxyphenyl)propionate), fabriqué par BASF.

La composition adhésive selon la présente invention peut être préparée par simple mélange de ses composants à température comprise dans une fourchette de 130 à 200°C, jusqu'à obtention d'un mélange homogène. Le mélange homogène chauffé est ensuite conduit à se refroidir, et donc à se durcir, jusqu'à température ambiante. Les techniques de mélange sont bien connues de l'homme du métier. Il est aussi possible de préparer la composition adhésive de manière industrielle en utilisant les techniques conventionnelles. Ces techniques comprennent, à titre d'exemple, le mélange par extrusion, avec vis simple ou vis double. La composition adhésive, une fois fabriquée, peut être conditionnée sous forme de pastilles ou billes ou blocs, en utilisant les techniques conventionnelles.

La composition adhésive selon l'invention peut être aisément caractérisée directement par différentes méthodes analytiques conventionnelles ou après solubilisation et/ou chromatographie liquide semi-préparative, suivie d'une identification fraction par fraction, telle que la DSC, l'infrarouge, la spectroscopie infrarouge (en masse ou en surface), la chromatographie d'exclusion stérique (ou SEC pour « *Steric Exclusion Chromatography »* en anglais), par CDFS (pour « *Crystallinify-Driven Fictional Sec* » en anglais), ou par RMN (ou NMR en anglais pour « *Nuclear Magnetic Resonance* »).

Une fois mélangée, la composition selon l'invention peut être fondue et co-extrudée, avec le matériau adhésif thermofusible à enrober, ou bien elle peut être formée en film par moulage ou fondue par extrusion, sur une surface du produit adhésif thermofusible constitué du matériau adhésif thermofusible.

L'invention concerne aussi un film pour produit adhésif thermofusible constitué d'au moins un matériau adhésif thermofusible, ledit film étant constitué d'au moins une composition selon l'invention.

Par « *film* », on entend selon l'invention un produit rigide ou semi rigide ou souple ou conformable, d'épaisseur allant de 10 µm à 2 mm de préférence de 20 à 500 µm et de façon encore plus préférée de 25 à 300 µm.

Le matériau adhésif thermofusible peut être un mastic thermofusible.

L'invention concerne encore un produit adhésif thermofusible prêt à l'emploi, comprenant :
- au moins un produit adhésif thermofusible constitué d'au moins un matériau adhésif thermofusible, et
- au moins un enrobage du produit adhésif thermofusible, l'enrobage étant constitué d'un film selon l'invention.

Un matériau adhésif thermofusible est par exemple tel que décrit dans la demande de brevet WO 2006/050108.

Un mastic thermofusible est par exemple le mastic thermofusible de type butyle décrit dans la demande de brevet WO 2006/037500.

L'invention concerne aussi un procédé de fabrication d'un produit adhésif thermofusible prêt à l'emploi, comprenant au moins un produit adhésif thermofusible constitué d'au moins un matériau adhésif thermofusible, et au moins un enrobage du produit adhésif thermofusible constitué d'un film, ledit procédé étant caractérisé en ce qu'il comprend une étape de co-extrusion d'un film d'une composition selon l'invention autour du produit adhésif thermofusible.

Comme expliqué, de façon préférée, la composition adhésive selon l'invention forme un film qui est réalisé simultanément avec le produit adhésif thermofusible, par exemple dans un procédé de co-extrusion. Le produit adhésif thermofusible est le plus souvent une composition thermoplastique d'au moins un matériau adhésif thermofusible, formée en combinant au moins un, de préférence au moins deux ingrédient(s). Cette composition a généralement la propriété de ramollir et de devenir moulable quand elle est chauffée, et de durcir et de devenir relativement rigide quand elle est refroidie, de préférence à température ambiante, le degré de rigidité et de dureté variant énormément selon la nature de la composition. La composition thermoplastique est de façon plus générale n'importe quel matériau qui devient ou qui reste souple et peut être moulé quand il est soumis à la chaleur et qui devient plus dur quand il est refroidi, voire relativement rigide quand il est refroidi.

Le matériau adhésif thermofusible est généralement mis en forme par extrusion, co-extrusion, moulage et toute technique spécifique connue de l'homme du métier, telle que par exemple décrite dans la demande de brevet WO 2006/050108 ou la demande de brevet WO 2006/040194. Il est dénommé produit adhésif thermofusible une fois qu'il possède une forme géométrique. Le produit adhésif thermofusible selon l'invention est constitué de, de façon préférée consiste en, au moins un matériau adhésif thermofusible. Il est aussi possible que la composition adhésive selon l'invention puisse envelopper ce produit adhésif thermofusible par une méthode d'enrobage à la main.

Le produit adhésif thermofusible prêt à l'emploi, c'est-à-dire enrobé selon l'invention, peut être chargé directement dans le bac de fusion de la machine à application dudit produit adhésif, ce qui permet d'éliminer tout déchet et d'éviter toute perte de temps éventuelle.

De préférence, le produit adhésif thermofusible est un des HMPSA utilisés dans les domaines de l'industrie, notamment ceux typiques des applications, rubans et étiquettes, autoadhésifs. Des exemples les plus représentatifs peuvent être des produits adhésifs thermofusibles, soit de polymères de type styrène isoprène styrène (SIS), soit de polymères de type styrène butadiène styrène (SBS). Ces produits contiennent une large proportion de résines tackifiantes (entre 30 et 70%), et une proportion d'huile variant de 0% à 50% en masse. Les viscosités de ces produits HMPSA sont l'ordre de 1 à 100.000 mPa.s à 170°C.

Mais, plus généralement, le matériau adhésif thermofusible est tout matériau de type HMA (HMA pour « *Hot Melt Adhesive* »), qu'on peut extruder et qu'on va livrer en technologie de berlingot auto-protégé. Une composition HMPSA en constitue un cas particulier. Mais ce matériau adhésif thermofusible peut aussi comporter des copolymères de type SBC, des HMA bases APAO, ou EVA, ou Acrylique ou Polyoléfine de base obtenue par catalyse métallocène, ainsi qu'il est connu de l'homme du métier.

De préférence, le matériau adhésif thermofusible peut comprendre au moins un polymère oléfinique issu de la catalyse Ziegler-Natta, comme sont par exemple les polyalphaoléfines amorphes de grades Vestoplast^{®} de la société Evonik, les grades Hyflex^{®} de la société Bassel, ou bien tout polymère oléfinique issu de la catalyse de type métallocène, comme par exemple les grades Affinity^{®}, Engage^{®}, Versify^{®}, Infuse^{®} de la société Dow-Chemical ou Vistamax^{®}, Exxact^{®} de la société Exxon Mobil Chemical ou bien Licocen^{®} de la société Clariant, ou bien LMPP^{®} de la société Idemitsu. Le monomère en présence majoritaire dans ce polymère oléfinique est généralement soit l'éthylène, soit le propène, et les monomères minoritaires sont généralement l'éthylène, le propène, le butène, l'hexène, et l'octène.

### Exemples

Les exemples suivants illustrent l'invention sans pour autant en limiter la portée.

Sauf mention contraire, tous les pourcentages sont donnés en poids/poids.

### 1. Protocoles des expériences

### 1.1. Description des berlingots faits à la main au laboratoire

Chacun des berlingots réalisés à la main au laboratoire, pour la conduite des expériences, était constitué d'un matériau adhésif thermofusible. Chacun de ces berlingots était préparé par simple mélange à chaud selon les techniques habituelles, suivi d'un durcissement par refroidissement, puis d'une découpe, dans le matériau adhésif thermofusible ainsi constitué, d'un parallélépipède rectangle de dimensions 1cm x 1cm x 8cm = 8 cm³.

Les trois différents matériaux adhésifs thermofusibles utilisés dans ces expériences sont décrit ci-après :
1. 30% de copolymères EVA avec un teneur en acétate de vinyle comprise entre 25 et 35%+ 55% d'ester de colophane base pentaérythritol + 15% d'huile minérale naphténique (matériau dénommé **MAT1**)
2. 30% de Copolymère SIS avec teneur en styrène comprise entre 12 et 20% + 49% de résine tackifiante C5/C9 + 21% d'huile minérale naphténique (matériau dénommé **MAT2**)
3. 35% de copolymère SBS à teneur en styrène comprise entre 25 et 32% + 46% d'ester de colophane base pentaérythritol+ 19% huile minérale naphténique (matériau dénommé **MAT3**).

On extrudait par ailleurs un film régulier de 70 µm d'épaisseur du matériau "peau" (i.e. de composition adhésive thermofusible à tester), à l'aide d'une filière d'extrusion plate (ou buse à lèvres) chauffée à 180°C, au laboratoire, alimentée en matériau fondu par exemple par une pompe à engrenage, autour de l'âme du berlingot constitué de matériau MAT1, MAT2 ou MAT3. Ce film, une fois refroidi, entourait l'âme du berlingot, fait en matériau adhésif thermofusible, pour en constituer la "peau". On pliait proprement les extrémités en plusieurs fois pour éviter les fuites de matériau adhésif thermofusible au cours du temps sous l'effet de la température et des contraintes mécaniques.

### 1.2. Description des berlingots enrobés fabriqués par essais industriels sur machine JPB S10

Sur une machine de marque JPB, modèle S10, on a procédé à une co-extrusion de la composition adhésive thermofusible à tester et du matériau adhésif thermofusible (MAT2 ou MAT3). Une buse annulaire de co-extrusion, de diamètre environ 4 cm, sortait des berlingots enrobés fondus directement dans un bain d'eau, à l'horizontale. La température de l'eau était située entre 2°C et 8°C, la température du matériau "peau" (i.e. de la composition adhésive thermofusible à tester) à la buse était située entre 160°C et 220°C, et la température du matériau adhésif thermofusible MAT2 ou MAT3 était située entre 100 et 170°C. La pression au sein du circuit de matériau "peau" était de l'ordre de 2 à 3 MPa. La température de la buse variait de 150 à 230°C. Les débits étaient réglés pour avoir environ 2% en masse de composition adhésive thermofusible (ou matériau "peau"), comparative ou selon l'invention, par rapport au matériau adhésif thermofusible. Le matériau co-extrudé sorti était ensuite pincé par une pièce mise en rotation appelée enclume et qui transformait ainsi le matériau co-extrudé continu en des segments séparés, soit complètement, soit encore légèrement accrochés entre eux pour être ensuite facilement détachables. Cette enclume était haute d'environ 10 cm, épaisse de 2 cm, et large de 20 cm. La vitesse de rotation de l'enclume était de l'ordre de 600 à 700 mm/s à la périphérie. Entre la sortie de la buse et l'enclume, soit environ 20 cm dans l'eau, on avait placé des rouleaux de guidage qui compressaient plus ou moins le co-extrudat. Ils étaient réglés pour une vitesse linéaire de l'ordre de 100 à 150 mm/s.

Les berlingots étaient ensuite entraînés dans le flot de liquide refroidissant jusqu'à ce qu'on puisse les manipuler et les stocker pour leur utilisation ultérieure. Au final, les berlingots avaient chacun une longueur de 12 à 16 cm, et pesaient chacun entre 250 et 350 grammes. L'estimation de l'épaisseur du matériau "peau" recouvrant le berlingot sur la base de 2% en masse sur la surface couverte, était de 170 grammes par m², soit 150 à 200 µm environ (selon la densité).

La création d'hernies ou de verrues (matériau adhésif thermofusible MAT2 ou MAT3 sortant à l'extérieur de la "peau") immédiatement après l'extrusion était jugée "bonne" si moins de 5% des berlingots étaient mal formés de cette façon. En outre, la formation de berlingots capables d'être séparés facilement après pincement par l'enclume était évaluée "bonne" quand moins de 5% des berlingots restaient attachés ensemble par leurs extrémités.

### 1.3. Description du test de mottage réalisé sur des berlingots fabriqués à la main au laboratoire

On empilait 3 étages de 3 berlingots en quinconce, et on plaçait l'édifice en étuve ventilée pendant une durée variant de quelques heures à plusieurs jours, à 50°C, dans une barquette en carton siliconé qui permettait de maintenir l'édifice en place. On observait l'aspect visuel et de prise en masse de l'édifice en le défaisant à la main, une fois refroidi (soit entre deux et quatre heures après la sortie de l'étuve).

### 1.4. Description du test de mottage réalisé sur des berlingots provenant d'essais industriels sur machine JPB S10

On empilait 4 étages de berlingots en quinconce, soit environ 14 berlingots au total, et on plaçait l'édifice en étuve ventilée pendant une durée variant de quelques heures à plusieurs jours à 50°C, dans un carton avec revêtement siliconé qui permettait de maintenir l'édifice en place. On observait l'aspect visuel et de prise en masse de l'édifice en le défaisant à la main, une fois refroidi (soit entre deux et quatre heures après la sortie de l'étuve).

### 2. Compositions comparatives

### 2.1. Composition comparative 1 (C1)

La première composition comparative, **C1,** comprenait 49% en poids de Vector^{®} 44-11 qui est un copolymère bloc styrénique, 30% en poids de Piccotex^{™} 120 et 10% en poids d'huile Nyflex^{®} 222B, qui est une huile paraffinique, ainsi que 1% de conservateur Irganox^{®} 1010.

Une telle composition présentait une viscosité à 180°C de 41.000 mPa.s, un point de ramollissement de 65°C, et un module élastique G' à 60°C, tel que mesuré par test rhéologique de balayage en température de 250°C à 10°C à 10°C/min et à 10 rad/s, de 1,7.10⁵ Pa. Une telle composition présentait en outre une enthalpie de fusion DSC à 20°C/min de 17J/g, et un point de croisement des modules élastiques et visqueux, par même test rhéologique, égal à 61°C.

Cette composition C1 correspondait à la composition 1601-00A décrite dans la demande de brevet WO 2006/050108, à la page 47.

### 2.2. Composition comparative 2 (C2)

La deuxième composition comparative, **C2,** comprenait 100% d'un copolymère éthylène / acétate de vinyle l'Evatane^{®} 18-150. Selon le test rhéologique selon l'invention, cette composition présentait un module élastique à 60°C, G', égal à 6,7.10⁴ Pa, et un point de croisement des modules élastiques et visqueux égal à 61,7°C. Cette composition présentait en outre un point de ramollissement de 97°C, une viscosité à 180°C de 88.500 mPa.s et une enthalpie de fusion DSC à 20°C/min de 86,4 J/g.

Cette composition C2 correspondait à la composition Evatane^{®} 18-150 décrite dans la demande de brevet WO 2006/050108, à la page 47.

### 2.3. Composition comparative 3 (C3)

La troisième composition comparative, **C3,** comportait 40% de cire paraffinique (68-70°C), 20% de résine tackifiante Wingtack^{®} ET (extra), 39% d'un copolymère éthylène / acétate de vinyle, l'Evatane^{®} 28-06 et 1% de conservateur Irganox^{®} 1010.

Cette composition présentait une viscosité à 180°C de 9.500 mPa.s, un point de ramollissement de 82°C, une enthalpie de fusion DSC à 20°C/min de 90 J/g et, par le test rhéologique selon l'invention, un module élastique G', à 60°C, égal à 1,20.10⁵ Pa, ainsi qu'un point de croisement des modules élastiques et visqueux égal à 62°C.

Cette composition C3 correspondait à la composition 1601-156D décrite dans la demande de brevet WO 2006/050108 (Tableau 2a, page 45).

### 2.4. Composition comparative 4 (C4)

La quatrième composition comparative, **C4,** comprenait 25% poids de cire paraffinique (58-60°C), 24% poids de cire Paraflint^{®} C80 (qui est une cire de type Fisher-Tropsch à point de fusion de 80 à 115°C, de viscosité à 135°C supérieure à 10 cP (avec 1 cP = 1 mPa.s) et de masse moléculaire moyenne en nombre de 600 à 1300 Da), 15% de copolymère éthylène / acrylate, le Lotryl^{®} 15MA 03, 25% de polyoléfine polymérisée par catalyse métallocène Affinity^{®} PL 1280, 10% poids de copolymère bloc styrénique Kraton^{®} G 1657, et 1% en poids d'Irganox^{®} 1010.

Une telle composition présentait une viscosité à 180°C de 35.800 mPa.s, un point de ramollissement de 101°C et, par test rhéologique selon l'invention, un module élastique à 60°C, G', égal à 2,10.10⁵ Pa, ainsi qu'un point de croisement des modules élastiques et visqueux de 72°C. En outre, cette composition présentait une enthalpie DSC à 20°C/min de 135 J/g.

Cette composition C4 correspondait à la composition 1601-62A décrite dans la demande de brevet WO 2006/050108 (Tableau 1a, page 43).

### 3. Compositions selon l'invention

Les compositions selon l'invention, INV1, INV2, INV3 et INV4, étaient les suivantes.

### 3.1. Composition selon l'invention 1 (INV1)

La composition **INV1** comportait 40% poids de copolymère bloc styrénique (composant a)) Kraton^{®} G 1657, deux résines tackifiantes (composants b)), à savoir 7% poids de Norsolèné^{®} W85 et 17% poids d'Eastotac^{®} H100 W, 32% poids d'une cire (composant c)) Polywax^{®} 500, ainsi que 3% poids d'une cire de polyéthylène (composant d)) AC^{®} 8, ainsi que 1% poids d'Irganox^{®} 1010.

La composition INV1 présentait une viscosité à 180°C de 15.000 mPa.s, un point de ramollissement de 108°C et, par test rhéologique selon l'invention, un module élastique, G', à 60°C, de 5,8.10⁵ Pa, et un point de croisement des modules élastiques et visqueux de 81,8°C. Cette composition INV1 présentait en outre une enthalpie DSC à 20°C/min de 61,2 J/g.

### 3.2 Composition selon l'invention 2 (INV2)

La composition **INV2** comportait 30% poids de copolymère bloc styrénique (composant a)) Kraton^{®} G 1657, deux résines tackifiantes (composants b)), à savoir 7% poids de Norsolène^{®} W85 et 7% en poids d'Eastotac^{®} H100 W, 22% poids de cire (composant c)) Polywax^{®} 500, 3% en poids de cire de polyéthylène (composant d)) AC^{®} 8, 30 % en poids de polyoléfine polymérisée par catalyse métallocène (composant d) Affinity^{®} GA 1900, ainsi que 1% en poids d'Irganox^{®} 1010.

Cette composition INV2 présentait une viscosité à 180°C de 17.400 mPa.s, un point de ramollissement de 116°C, et par test rhéologique selon l'invention, un module élastique, G', à 60°C, de 1,3.10⁶ Pa, et un point de croisement des modules élastiques et visqueux de 90,5°C. Cette composition INV2 présentait en outre une enthalpie de 65,1 J/g.

### 3.3 Composition selon l'invention 3 (INV3)

La composition **INV3** comportait 31% en poids de copolymère bloc styrénique (composant a)) Kraton^{®} G 1657, 7% en poids de résine tackifiante (composant b) Escorez^{®} 5600, 26% en poids de cire (composant c)) Polywax^{®} 500, 3% en poids de cire de polyéthylène (composant d)) AC^{®} 8, 32 % en poids de polyoléfine polymérisée par catalyse métallocène (composant d) Affinity^{®} GA 1900 ainsi que 1 % poids d'Irganox^{®} 1010.

Cette composition INV3 présentait une viscosité à 180°C de 26.000 mPa.s, un point de ramollissement de 114°C, et par test rhéologique selon l'invention, un module élastique, G', à 60°C, de 1,6.10⁶ Pa, et un point de croisement des modules élastiques et visqueux de 92°C. Cette composition INV3 présentait en outre une enthalpie de 62,1 J/g.

### 3.4 Composition selon l'invention 4 (INV4)

La composition **INV4** comportait 32% en poids de copolymère bloc styrénique (composant a)) Kraton^{®} G 1657, 7% en poids de résine tackifiante (composant b) Escorez^{®} 5600, 27% en poids de cire (composant c)) Paraflint^{®} H1, 32 % en poids de polyoléfine polymérisée par catalyse métallocène (composant d) Affinity^{®} GA 1900 ainsi que 2% poids d'Irganox^{®} 1010.

Cette composition INV4 présentait une viscosité à 180°C de 22.000 mPa.s, un point de ramollissement de 107°C, et par test rhéologique selon l'invention, un module élastique, G', à 60°C, de 1,5.10⁶ Pa, et un point de croisement des modules élastiques et visqueux de 87°C. Cette composition INV4 présentait en outre une enthalpie de 60,2 J/g.

Les huit compositions sont résumées dans le Tableau 1 suivant.

**Tableau 1**

| Composition | **C1** (1601-00A) (comparative) | **C2** (EVA 18-150) (comparative) | **C3** (1601-156D) (comparative) | **C4** (1601-162A) (comparative) | **INV1** (selon l'invention) | **INV2** (selon l'invention) | **INV3** (selon l'invention) | **INV4** (selon l'invention) |
|---|---|---|---|---|---|---|---|---|
| Copolymère bloc styrénique | Vector^{®} 4411, 49% | - | - | Kraton^{®} G 1657, 10% | Kraton^{®} G 1657, 40% (composant a)) | Kraton^{®} G 1657, 30% (composant a)) | Kraton^{®} G 1657,31% (composant a)) | Kraton^{®} G 1657, 32% (composant a)) |
| Résine tackifiante aromatique | Piccotex^{™} 120, 30% | - | - | - . | Norsolene^{®} W85, 7% (composant b)) | Norsolene^{®} W85, 7% (composant b)) | - | - |
| Résine tackifiante styrénique | - | - | Wingtack^{®} ET, 20% | - | Eastotac^{®} H 100 W, 17% (composant b)) | Eastotac^{®} H 100 W, 7% (composant b)) | Escortez^{®} 5600, 7% (composant b)) | Escorez^{®} 5600, 7% (composant b)) |
| Cire | - | - | - | Paraflint^{®} C80, 24% | Polywax^{®} 500, 32% (composant c)) | Polywax^{®} 500, 22% (composant c)) | Polywax^{®} 500, 26% (composant c)) | Paraffint^{®} H1, 27% (composant c)) |
| Polyoléfine polymérisée par catalyse métallocène | - | Evatane^{®} 18 150, 100% | Evatane^{®} 28-06, 39% | Lotryl^{®} 15MA, 15%, + Affinity^{®} PL 1280, 25% | - | Affinity^{®} GA 1900, 30% (composant d)) | Affinity^{®} GA 1900, 32% (composant d)) | Affinity^{®} GA 1900, 32% (composant d)) |
| Cire de polyéthylène | - | - | - | - | Cire AC^{®}8, 3% (composant d)) | Cire AC^{®}8, 3% (composant d)) | Cire AC^{®}8, 3% (composant d)) | - |
| Cire paraffinique | Paraffine wax (65°C)_{,} 10%x | - | Paraffine wax (68-70°C), 40% | Paraffine wax (58-60°C), 25% | - | - | - | - |
| Huile naphténique et/ou paraffinique | Nyflex^{®} 222B, 10% | - | - | - | - | - | - | - |
| Conservateur | Irganox^{®} 1010, 1% | - | Irganox^{®} 1010, 1% | Irganox^{®} 1010, 1% | Irganox^{®} 1010, 1% | Irganox^{®} 1010, 1% | Irganox^{®} 1010, 1% | Irganox^{®} 1010, 2% |

### 4. Tests de dissolution des compositions adhésives thermofusibles (comparatives et selon l'invention)

Les différentes compositions adhésives thermofusibles, comparatives et selon l'invention, étaient testées selon un même test de dissolution réalisé pour chacune de ces compositions, sur chacun des trois matériaux adhésifs thermofusibles MAT1, MAT2 et MAT3.Le test de dissolution réalisé était le suivant :
On introduisait 2% en masse de la composition adhésive thermofusible, comparative ou selon l'invention, sous forme de film d'épaisseur 70 µm, dans 50 g de matériau adhésif thermofusible (MAT1, MAT2 ou MAT3), à 170°C, dans un pot en aluminium chauffé. On laissait au repos pendant une heure, puis on agitait à la main avec un bâton en verre, pendant 3 minutes, à environ 2 tours par minute. On observait l'aspect final du produit.

Par conséquent, les compositions adhésives thermofusibles comparatives C2, C3 et C4 n'étaient pas acceptables. Par contre, la composition adhésive thermofusible comparative C1 et les compositions adhésives thermofusibles INV1, INV2, INV3 et INV4 selon l'invention, étaient acceptables.

Les résultats obtenus sont résumés dans le tableau 2 suivant:

**Tableau 2**

| | **C1** | **C2** | **C3** | **C4** | **INV1** | **INV2** | **INV3** | **INV4** |
|---|---|---|---|---|---|---|---|---|
| **MAT1** | 1 | 1 | 1 | 1 | 1 | 1 | 1 | 1 |
| **MAT2** | 1 | 3 | 3 | 3 | 2 | 2 | 2 | 2 |
| **MAT3** | 1 | 3 | 3 | 3 | 2 | 2 | 2 | 2 |

| | | | | | | | | |
|---|---|---|---|---|---|---|---|---|
| où 1 = transparent ; homogénéité du produit de mélange final ; acceptable ; 2 = trouble ; quasi-homogénéité du produit de mélange final ; acceptable ; et 3 = blanchâtre ; hétérogénéité du produit de mélange final ; inacceptable. 5. Observations durant la fabrication des berlingots enrobés par essais industriels sur machine JPB S10 (cf. 1.2.) | | | | | | | | |

Dans cet exemple, les six compositions adhésives thermofusibles étaient observées, durant la fabrication de berlingots d'âme constituée de matériau adhésif thermofusible MAT2 ou MAT3, selon deux critères d'observation :
Critère I : : évitement de former des hernies liquides après quelques mètres, et
Critère II: éléments pincés facilement séparables au cours du refroidissement.

Les appréciations sont visuelles, effectuées par le même opérateur, et se répartissent selon deux appréciations : "bon" ou "mauvais".

On obtenait les même résultats, que l'âme des berlingots soit constituée de matériau MAT2 ou MAT3. Ces résultats sont résumés dans le tableau 3 suivant.

**Tableau 3**

| | C1 | C2 | C3 | C4 | INV1 | INV2 | INV3 | INV4 |
|---|---|---|---|---|---|---|---|---|
| Observation I | - | M | - | M | B | B | B | B |
| Observation II | - | B | - | M | B | B | B | B |

| | | | | | | | | |
|---|---|---|---|---|---|---|---|---|
| où B = Bon ; acceptable ; M = Mauvais : homogénéité inacceptable ; et "-" = Non déterminé. | | | | | | | | |

Les compositions comparatives C2 et C4 n'étaient pas acceptables, au vu de leurs résultats.

Ainsi, ces données permettaient de démontrer que les compositions INV1, INV, INV3 et INV4 selon l'invention pouvaient être réalisées en tant que matériau "peau" sur berlingot constitué de matériau MAT2 ou MAT3, dans un procédé de fabrication industriel.

En effet, l'utilisation de compositions adhésives thermofusibles INV1, INV2, INV3 et INV4 était jugée bonne, c'est-à-dire que moins de 5% des berlingots étaient mal formés. De même, la formation de berlingots capables d'être séparés facilement grâce à ces compositions INV1, INV2, INV3 et INV4 était jugée bonne, c'est-à-dire que moins de 5% des berlingots restaient attachés ensemble par leurs extrémités.

### 6. Tests de mottage réalisés sur des berlingots fabriqués à la main au laboratoire (cf. 1.3).

Dans cet exemple, les tests ont été réalisés sur les deux matériaux adhésifs différents **MAT2** et **MAT3.**

Pour chaque matériau MAT2 ou MAT3, les résultats des tests du présent exemple ont été réalisés par observation et manipulation, soit après 24 heures à 50°C (durée **D1**), soit après 7 jours en continu à 50°C (durée **D2**).

Les critères étaient les suivants, du plus favorable au moins favorable:
**** : matériau non collant ; acceptable ;
*** : berlingot décollage à la main sans destruction ; acceptable ;
** : matériau collant ; inacceptable ;
* : berlingot non décollable sans destruction ; inacceptable.

Les résultats sont résumés dans le Tableau 4 suivant.

**Tableau 4**

| | | C1 | C2 | C3 | C4 | INV1 | INV2 | INV3 | INV4 |
|---|---|---|---|---|---|---|---|---|---|
| MAT 2 | D1 | * | *** | * | - | **** | **** | **** | **** |
| | D2 | * | * | * | - | *** | *** | *** | *** |
| MAT 3 | D1 | - | ** | * | - | **** | **** | *** | *** |
| | D2 | - | * | * | - | ° | ° | ° | ° |
| | | | | | | **** | **** | **** | **** |

| | | | | | | | | | |
|---|---|---|---|---|---|---|---|---|---|
| où ° = motté et non collant ; et "-" = non déterminé. | | | | | | | | | |

On a donc constaté que seules les compositions selon l'invention effectuaient avec succès les tests de mottage des berlingots fabriqués à la main au laboratoire.

### 7. Tests de mottage réalisés sur des berlingots provenant d'essais industriels sur machine JPB S10 (cf. 1.4.)

On reprenait des tests de mottage des six compositions, comparatives et selon l'invention, avec le matériau adhésif thermofusible MAT2 ou MAT3. Les critères (****, ***, **, *) étaient semblables à ceux de l'exemple 5.

Les résultats sont résumés dans le tableau 5 ci-après.

**Tableau 5**

| | | C1 | C2 | C3 | C4 | INV1 | INV2 | INV3 | INV4 |
|---|---|---|---|---|---|---|---|---|---|
| MAT2 | D1 | - | *** | - | - | **** | **** | **** | **** |
| | D2 | - | * | - | - | *** | *** | *** | *** |
| MAT3 | D1 | - | - | - | *** | **** | **** | **** | **** |
| | D2 | - | - | - | *** | ° | ° | ° | ° |
| | | | | | | **** | **** | **** | **** |

| | | | | | | | | | |
|---|---|---|---|---|---|---|---|---|---|
| où ° = motté et non collant ; et "-" = non déterminé. | | | | | | | | | |

On a donc constaté que les compositions adhésives thermofusibles INV1, INV2, INV3 et INV4 selon l'invention effectuaient ce test avec succès, et étaient donc particulièrement intéressantes du point de vue de l'utilisation industrielle.

### Conclusion

Les compositions adhésives thermofusibles INV1, INV2, INV3 et INV4 selon l'invention ont réalisé avec succès les tests en laboratoire et en milieu industriel (exemples 3 à 6).

## Revendications

1. Composition adhésive thermofusible destinée à former un film, la composition comprenant, en poids par rapport au poids total de la composition :
a) de 20 à 60% d'au moins un copolymère bloc styrénique, choisi dans le groupe formé par les copolymères triblocs de formule A-B-A dans laquelle A représente un bloc non élastomère styrénique (ou polystyrène) et B représente un bloc élastomère de polybutadiène hydrogéné totalement ou en partie, les copolymères diblocs de formule A-B dans laquelle A et B sont tels que définis précédemment, et leurs mélanges ;
b) de 5 à 55% d'au moins une résine tackifiante de masse molaire en nombre comprise entre 200 Da et 10 kDa (déterminée par chromatographie par perméation de gel - GPC- avec étalonnage polystyrène), et choisie dans le groupe formé par les résines susceptibles d'être obtenues :
i) par hydrogénation, polymérisation ou copolymérisation (avec ou sans hydrocarbure aromatique) de mélanges d'hydrocarbures aliphatiques insaturés ayant environ 5 ou 9 atomes de carbone, et issus de coupes pétrolières, et
ii) par polymérisation d'hydrocarbures terpéniques en présence de catalyseurs de Friedel-Crafts, et
iii) par polymérisation, suivie éventuellement d'hydrogénation au moins partielle, d'unités alpha méthylstyrène et éventuellement styrène;
c) de 10 à 40% d'au moins une cire de point de fusion de 75 à 125°C et de masse moléculaire moyenne en nombre de 500 à 1500 Da (déterminée par chromatographie par perméation de gel - GPC- avec étalonnage polystyrène); et
d) de 1 à 30% d'au moins un composant choisi parmi les cires de polyéthylène et les polyoléfines polymérisées par catalyse métallocène ;
ladite composition présentant une viscosité (Brookfield) à 180°C comprise dans une fourchette de 3.000 à 70.000 mPa.s, un point de ramollissement compris dans une fourchette de 80 à 130°C, de préférence de 90 à 120°C, et un module élastique à 60°C, compris dans une fourchette de 2.10⁵ à 10⁸ Pa, de préférence de 2.10⁵ à 10⁷ Pa, tel que mesuré par test rhéologique de balayage en température de 150°C à 10°C à 10°C/min et à la fréquence d'oscillation constante de 10 rad/s.

2. Composition selon la revendication 1, telle qu'elle présente un point de croisement des modules élastique et visqueux, par test rhéologique de balayage en température de 150°C à 10°C à 10°C/min et à la fréquence d'oscillation constante de 10 rad/s, compris dans une fourchette de 70 à 100°C.

3. Composition selon l'une quelconque des revendications 1 ou 2, telle qu'elle présente en outre une enthalpie de fusion DSC comprise dans la fourchette de 40 à 100 J/g.

4. Composition selon l'une quelconque des revendications 1 à 3, telle que le composant a) a une masse molaire moyenne en poids M_{W} comprise entre 5 kDa et 500 kDa (déterminée par chromatographie par perméation de gel - GPC- avec étalonnage polystyrène), et de préférence une teneur en styrènes du copolymère bloc styrénique est généralement comprise dans une fourchette de 10 à 50%, de préférence de 10 à 33%.

5. Composition selon l'une quelconque des revendications 1 à 4, telle que le composant a) est un mélange de copolymères diblocs et de copolymères triblocs ayant le même bloc élastomère B, la teneur en copolymères diblocs dans le mélange de copolymères blocs styréniques étant comprise dans une fourchette de 0 à 80%, de préférence de 0 à 40% poids.

6. Composition selon l'une quelconque des revendications 1 à 5, telle que le composant a) est un copolymère de type SEBS.

7. Composition selon la revendication 6, telle que le composant a) comporte en outre de 0 à 15%, de préférence de 0 à 10%, d'au moins un copolymère SBC d'autre catégorie qu'un copolymère SEBS.

8. Composition selon l'une quelconque des revendications 1 à 7, telle que la résine tackifiante est choisie dans le groupe formé par les résines tackifiantes appartenant à la catégorie i) ou ii) suivante et/ou dans le groupe des résines tackifiantes appartenant à la catégorie iii) suivante:
i) les résines hydrocarbonées à motif C₅ ; les résines hydrogénées DCPD (dicyclopentadiène) ; les résines hydrogénées DCPD modifiées C₉ ; les résines hydrocarbonées à motif C₅ modifiées C₉ ; les résines hydrogénées à motif C₅ ;
ii) les résines terpéniques ;
iii) les résines aromatiques de type C₉ au moins partiellement hydrogénées.

9. Composition selon l'une quelconque des revendications 1 à 8, telle que le composant c) est une cire de type Fischer-Tropsch.

10. Composition selon l'une quelconque des revendications 1 à 9, comprenant en outre de 0 à 20% d'au moins une cire paraffinique.

11. Composition selon l'une quelconque des revendications 1 à 10, comprenant en outre de 0 à 7% d'au moins une cire d'amide.

12. Composition selon l'une quelconque des revendications 1 à 11, comprenant en outre de 0 à 10% d'au moins une huile naphténique et/ou paraffinique.

13. Film pour produit adhésif thermofusible constitué d'au moins un matériau adhésif thermofusible, ledit film étant constitué d'au moins une composition selon l'une des revendications 1 à 12.

14. Produit adhésif thermofusible prêt à l'emploi comprenant :
- au moins un produit adhésif thermofusible constitué d'au moins un matériau adhésif thermofusible, et
- au moins un enrobage du produit adhésif thermofusible, l'enrobage étant constitué d'un film selon la revendication 13.

15. Procédé de fabrication d'un produit adhésif thermofusible prêt à l'emploi, comprenant au moins un produit adhésif thermofusible constitué d'au moins un matériau adhésif thermofusible et au moins un enrobage du produit adhésif thermofusible constitué d'un film, ledit procédé étant **caractérisé en ce qu'**il comprend une étape de co-extrusion d'un film d'une composition selon l'une quelconque des revendications 1 à 13 autour d'un produit adhésif thermofusible.

## Patentansprüche

1. Heißschmelzklebezusammensetzung, die zur Bildung einer Folie dient, wobei die Zusammensetzung in Gewicht, bezogen auf das Gesamtgewicht der Zusammensetzung, umfasst:
a) 20 bis 60 % mindestens eines Styrolblockcopolymers, das in der Gruppe ausgewählt wird, die von den Triblock-Copolymeren mit der Formel A-B-A, wobei A einen nicht elastomeren Styrolblock (oder Polystyrolblock) darstellt und B einen zur Gänze oder teilweise hydrierten Polybutadienelastomerblock darstellt, von den Diblock-Copolymeren mit der Formel A-B, wobei A und B wie vorder definiert sind, und ihren Gemischen gebildet ist;
b) 5 bis 55 % mindestens eines klebrigmachenden Harzes mit einer Molmasse in Zahlen zwischen 200 Da und 10 kDa (bestimmt durch Gel-Permeations-Chromatografie - GPC - in Relation zu Polystyrol), ausgewählt in der Gruppe, die von den Harzen gebildet ist, die auf folgende Weise erhalten werden können:
i) durch Hydrieren, Polymerisieren oder Copolymerisieren (mit oder ohne aromatischen Kohlenwasserstoff) von ungesättigten aliphatischen Kohlenwasserstoffgemischen mit ungefähr 5 oder 9 Kohlenstoffatomen, die aus Erdölschnitten stammen, und
ii) durch Polymerisieren von Terpen-Kohlenwasserstoffen im Beisein von Friedel-Craft-Katalysatoren, und
iii) durch Polymerisieren, eventuell gefolgt von einem zumindest teilweisen Hydrogenieren von Alpha-Methylstyrol- und eventuell -Styrol-Einheiten;
c) 10 bis 40 % mindestens eines Wachses mit einem Schmelzpunkt von 75 bis 125 °C und einer durchschnittlichen Molekularmasse in Zahlen von 500 bis 1500 Da (bestimmt durch Gel-Permeations-Chromatografie - GPC - in Relation zu Polystyrol); und
d) 1 bis 30 % mindestens einer Komponente, die unter den Polyethylenwachsen und den durch Metallocenkatalyse polymerisierten Polyolefinen ausgewählt ist;
wobei die Zusammensetzung eine Viskosität (Brookfield) bei 180 °C in einem Bereich von 3.000 bis 70.000 mPa.s, einen Erweichungspunkt in einem Bereich von 80 bis 130 °C, vorzugsweise von 90 bis 120 °C, und ein elastisches Modul bei 60 °C in einem Bereich von 2.10⁵ bis 10⁸ Pa, vorzugsweise von 2.10⁵ bis 10⁷ Pa, aufweist, gemessen durch rheologische Abtastprüfung bei einer Temperatur von 150 °C bis 10 °C bei 10 °C/min und der konstanten Schwingungsfrequenz von 10 rad/s.

2. Zusammensetzung nach Anspruch 1, die einen Kreuzungspunkt der elastischen und viskosen Module durch rheologische Abtastprüfung bei einer Temperatur von 150 °C bis 10 °C bei 10 °C/min und bei konstanter Schwingungsfrequenz von 10 rad/s in einem Bereich von 70 bis 100 °C aufweist.

3. Zusammensetzung nach einem der Ansprüche 1 oder 2, die ferner eine Schmelzenthalpie DSC in einem Bereich von 40 bis 100 J/g aufweist.

4. Zusammensetzung nach einem der Ansprüche 1 bis 3, bei der die Komponente a) eine durchschnittliche gewichtsbezogene Molmasse M_{W} zwischen 5 kDa und 500 kDa (bestimmt durch Gel-Permeations-Chromatografie - GPC - in Relation zu Polystyrol) hat, und vorzugsweise ein Styrolgehalt des Styrolblockcopolymers im Allgemeinen in einem Bereich von 10 bis 50 %, vorzugsweise von 10 bis 33 %, liegt.

5. Zusammensetzung nach einem der Ansprüche 1 bis 4, bei der die Komponente a) ein Gemisch aus Diblock-Colpolymeren und Triblock-Copolymeren mit demselben Elastomerblock B ist, wobei der Gehalt an Diblock-Copolymeren in dem Gemisch aus Styrolblockcopolymeren in einem Bereich von 0 bis 80 Ges.-%, vorzugsweise von 0 bis 40 Gew.-%, liegt.

6. Zusammensetzung nach einem der Ansprüche 1 bis 5, bei der die Komponente a) ein Copolymer des Typs SEBS ist.

7. Zusammensetzung nach Anspruch 6, bei der die Komponente a) ferner 0 bis 15 %, vorzugsweise 0 bis 10 %, mindestens eines Copolymers SBC einer anderen Kategorie als ein Copolymer SEBS umfasst.

8. Zusammensetzung nach einem der Ansprüche 1 bis 7, bei der das klebrigmachende Harz in der Gruppe ausgewählt ist, die von den klebrigmachenden Harzen gebildet ist, die der folgenden Kategorie i) oder ii) angehören, und/oder in der Gruppe von klebrigmachenden Harzen, die der folgenden Kategorie iii) angehören:
i) die kohlenwasserstoffhaltigen Harze mit Motiv C₅; die hydrierten Harze DCPD (Dicyclopentadien); die hydrierten Harze DCPD modifiziert C₉; die kohlenwasserstoffhaltigen Harze C₅ modifiziert C₉; die hydrierten Harze mit Motiv C₅;
ii) die Terpenharze;
iii) die aromatischen Harze des Typs C₉, die zumindest teilweise hydriert sind.

9. Zusammensetzung nach einem der Ansprüche 1 bis 8, bei der die Komponente c) ein Wachs des Typs Fischer-Tropsch ist.

10. Zusammensetzung nach einem der Ansprüche 1 bis 9, ferner umfassend 0 bis 20 % mindestens eines Paraffinwachses.

11. Zusammensetzung nach einem der Ansprüche 1 bis 10, ferner umfassend 0 bis 7 % mindestens eines Amidwachses.

12. Zusammensetzung nach einem der Ansprüche 1 bis 11, ferner umfassend 0 bis 10 % mindestens eines Naphten- und/oder Paraffinöls.

13. Folie für ein Heißschmelzklebeprodukt, das aus mindestens einem Heißschmelzklebematerial besteht, wobei die Folie aus mindestens einer Zusammensetzung nach einem der Ansprüche 1 bis 12 besteht.

14. Einsatzbereites Heißschmelzklebeprodukt, umfassend:
- mindestens ein Heißschmelzklebeprodukt, das aus mindestens einem Heißschmelzklebematerial besteht, und
- mindestens eine Umwicklung des Heißschmelzklebeproduktes, wobei die Umwicklung von einer Folie nach Anspruch 13 gebildet ist.

15. Verfahren zur Herstellung eines einsatzbereiten Heißschmelzklebeproduktes, umfassend mindestens ein Heißschmelzklebeprodukt, das aus mindestens einem Heißschmelzklebematerial und mindestens einer Umwicklung des Heißschmelzklebeproduktes, die von einer Folie gebildet ist, besteht, wobei das Verfahren **dadurch gekennzeichnet ist, dass** es einen Schritt der Co-Extrusion einer Folie mit einer Zusammensetzung nach einem der Ansprüche 1 bis 13 um ein Heißschmelzklebeprodukt umfasst.

## Claims

1. Hot-melt adhesive composition intended to form a film, the composition comprising, by weight with respect to the total weight of the composition:
a) from 20 to 60% of at least one styrene block copolymer, chosen from the group formed by the triblock copolymers of formula A-B-A in which A represents a non-elastomeric styrene block (or polystyrene) and B represents a totally or partially hydrogenated polybutadiene elastomeric block, the diblock copolymers of formula A-B in which A and B are as defined previously, and their mixtures;
b) from 5 to 55% of at least one tackifying resin having a number-average molecular weight comprised between 200 Da and 10 kDa (determined by gel permeation chromatography, GPC, with polystyrene standard), and chosen from the group formed by the resins capable of being obtained:
i) by hydrogenation, polymerization or copolymerization (with or without an aromatic hydrocarbon) from mixtures of unsaturated aliphatic hydrocarbons having approximately 5 or 9 carbon atoms, and originating from petroleum cuts, and
ii) by polymerization of terpenic hydrocarbons in the presence of Friedel-Crafts catalysts, and
iii) by polymerization, followed optionally by at least partial hydrogenation, of alpha-methylstyrene units and optionally styrene;
c) from 10 to 40% of at least one wax having a melting point from 75 to 125°C and a number-average molecular weight from 500 to 1500 Da (determined by gel permeation chromatography, GPC, with polystyrene standard); and
d) from 1 to 30% of at least one constituent chosen from polyethylene waxes and polyolefins polymerized by metallocene catalysis;
said composition having a Brookfield viscosity at 180°C comprised within a range from 3,000 to 70,000 mPa·s, a softening point comprised within a range from 80 to 130°C, preferably from 90 to 120°C and a modulus of elasticity at 60°C, comprised within a range from 2×10⁵ to 10⁸ Pa, preferably from 2×10⁵ to 10⁷ Pa, as measured by rheological scanning test at a temperature from 150°C to 10°C at 10°C/min and at the constant oscillation frequency of 10 rad/s.

2. Composition according to claim 1, such that it has an intersection point of the moduli of elasticity and viscosity by rheological scanning test at a temperature from 150°C to 10°C at 10°C/min and at the constant oscillation frequency of 10 rad/s, comprised within a range from 70 to 100°C.

3. Composition according to either of claims 1 and 2, such that it has moreover a DSC enthalpy of fusion comprised within the range from 40 to 100 J/g.

4. Composition according to any one of claims 1 to 3, such that constituent a) has a weight-average molecular weight M_{W} comprised between 5 kDa and 500 kDa (determined by gel permeation chromatography, GPC, with polystyrene standard), and preferably a styrene content of the styrene block copolymer generally comprised within a range from 10 to 50%, preferably from 10 to 33%.

5. Composition according to any one of claims 1 to 4, such that constituent a) is a mixture of diblock copolymers and triblock copolymers having the same elastomeric block B, the content of diblock copolymers in the mixture of styrene block copolymers being comprised within a range from 0 to 80%, preferably from 0 to 40% by weight.

6. Composition according to any one of claims 1 to 5, such that constituent a) is a SEBS type copolymer.

7. Composition according to claim 6, such that constituent a) contains moreover from 0 to 15%, preferably from 0 to 10%, of at least one SBC copolymer from a category other than an SEBS copolymer.

8. Composition according to any one of claims 1 to 7, such that the tackifying resin is chosen from the group formed by the tackifying resins belonging to the following category i) or ii) and/or from the group of tackifying resins belonging to the following category iii):
i) hydrocarbon resins with C₅ units; DCPD (dicyclopentadiene) hydrogenated resins; C₉-modified DCPD hydrogenated resins; C₉-modified hydrocarbon resins with C₅ units; hydrogenated resins with C₅ units;
ii) terpene resins;
iii) at least partially hydrogenated C₉ type aromatic resins.

9. Composition according to any one of claims 1 to 8, such that constituent c) is a Fischer-Tropsch type wax.

10. Composition according to any one of claims 1 to 9, **characterized in that** it comprises moreover from 0 to 20% of at least one paraffin wax.

11. Composition according to any one of claims 1 to 10, **characterized in that** it comprises moreover from 0 to 7% of at least one amide wax.

12. Composition according to any one of claims 1 to 11, comprising moreover from 0 to 10% of at least one naphthenic and/or paraffinic oil.

13. Film for hot-melt adhesive product constituted by at least one hot-melt adhesive material, said film being constituted by at least one composition according to one of claims 1 to 12.

14. Ready-to-use hot-melt adhesive product comprising:
- at least one hot-melt adhesive product constituted by at least one hot-melt adhesive material, and
- at least one coating of the hot-melt adhesive product, the coating being constituted by a film according to claim 13.

15. Method for the production of a ready-to-use hot-melt adhesive product, comprising at least one hot-melt adhesive product constituted by at least one hot-melt adhesive material, and at least one coating of the hot-melt adhesive product constituted by a film, said method being **characterized in that** it comprises a step of co-extrusion of a film of a composition according to any one of claims 1 to 13 around the hot-melt adhesive product.
